# EUROPEAN PATENT APPLICATION

(11) **EP 1 535 805 A1**
(43) Date of publication of application: **01.06.2005**
(21) Application number: 03104357.3
(22) Date of filing: 25.11.2003
(51) Int. Cl.: B60R 21/00, G01P 15/10

(54) **Impact sensing device**

(71) Applicant: IEE INTERNATIONAL ELECTRONICS & ENGINEERING S.A., 6468 Echternach (LU)
(72) Inventor: Orlewski, Pierre, Dr., 6834, Biwer (LU); Decoster, Yves, 6760, Ethe (BE)
(74) Representative: Beissel, Jean

(57) **Abstract**

An impact sensing device comprising a sealed chamber (20) filled with a pressure medium and at least one surface acoustic wave device (22) associated to said sealed chamber (20) for sensing a pressure inside said pressure chamber (20). The sealed chamber (20) is designed to be arranged in a vehicle at a location where an impact during a collision situation is to be sensed. The surface acoustic wave device (22) includes at least one surface acoustic wave resonator (26) and an antenna (28) for remotely communicating with a control unit (30) arranged within said vehicle.

## Description

### Introduction

The present invention relates to an impact sensing device, e.g. for use in the control of an airbag system, a pedestrian protection system, or the like.

In order to control the operation of vehicle safety systems such as airbags, seat belt tighteners and the like, modern vehicles are equipped with crash or impact sensing devices, which generate a specific signal in the case of a vehicle crash situation. Typical crash sensors comprise switching devices actuated due to an inertia mass, which closes an electrical contact in case of a vehicle acceleration or deceleration exceeding a specific threshold value. A crash sensor of this type is e.g. disclosed in US-A-3,889,130. One problem of these crash sensors is that they are not very selective regarding the exact location of the crash impact. Thus, crash sensors of this kind are not adapted for selectively deploying one or more safety countermeasures as a function of the crash impact. For example, front and rear side airbags may not easily be selectively controlled with this kind of sensors.

An other type of sensors, as e.g. disclosed in EP-A-0 527 492, uses two distant electrical contacts, which are suitably arranged at a location where a crash impact should to be detected. If an impact occurs on the vehicle in a crash situation, the deformation of the vehicle structure will cause the two electrodes to come into contact, which can be detected by a connected control unit. This type of impact sensors may be integrated in both the front and rear doors of a car, thus allowing to selectively detect a crash impact on one of these doors. By providing a plurality of these sensors, one in each interesting part of the vehicle, the deployment of the safety system can be selectively controlled in dependence of the crash impact location. However as each of the impact sensors has to be connected to the control unit, this solution requires an complicated and thus expensive cabling.

### Object of the invention

The object of the present invention is to provide an improved impact sensing device.

### General description of the invention

In order to overcome the abovementioned problems, the present invention proposes a impact sensing device comprising a sealed chamber filled with a pressure medium and at least one surface acoustic wave device associated to said sealed chamber for sensing a pressure inside said pressure chamber. The sealed chamber is designed to be arranged in a vehicle at a location where an impact during a collision situation is to be sensed. The surface acoustic wave device includes at least one surface acoustic wave resonator and an antenna for remotely communicating with a control unit arranged within said vehicle.

A surface acoustic wave resonator consists of a piezoelectric substrate with metallic structures (interdigital transducers) on its plain-polished surface. Due to piezoelectricity an electric signal at the interdigital transducers will stimulate a surface acoustic wave on the surface of the substrate. Vice versa a surface acoustic wave generates an electric charge distribution at the receiving interdigital transducers which is measurable as an electric signal. In case of a one port surface acoustic wave resonator only one interdigital transducer is connected electrically while the other interdigital transducers are reflective. If the interdigital transducer is connected to an antenna, the element is operable as a passive wirelessly interrogable system.

As the velocity of the surface acoustic wave travelling along the surface of the piezoelectric substrate is depending inter alia on the environmental conditions at the sensor surface, the response of the surface acoustic wave devices depends on the environmental conditions. Thus the surface acoustic wave devices may be used to measure environmental conditions such as pressure, temperature, etc.

In the context of the present invention, the surface acoustic wave resonator may be used for generally sensing the pressure inside the sealed chamber and more specifically for sensing whether the pressure inside the sealed chamber exceeds a predefined threshold value, which corresponds to a pressure spike due to an impact acting on the sealed chamber. It will be appreciated that with a suitable design of the surface acoustic wave resonator and a suitably chosen excitation frequency, the threshold value may be adjusted in a wide range of pressure values, thus enabling the impact sensor to be tuned for the sensing of a specific impact strength.

The surface acoustic wave resonator is connected to a miniaturized antenna so that the surface acoustic wave device acts as a resonator. If a radio frequency (RF) signal is sent to the surface acoustic wave device, the surface acoustic wave resonator oscillates at a frequency, which is depending on the given environmental condition in the vicinity of the surface acoustic wave device. The response signal of the surface acoustic wave device, which is wirelessly transmitted back to the control unit, may be processed in to control unit in order to extract the information about the measured condition.

It follows that the present invention provides a impact sensing device, which is remotely operable without the need of cabling between the sensing device and the control unit. Accordingly, even if a plurality of impact sensing devices according to the present invention are used in a car, such a solution does not require complicated cabling to be integrated for supplying and interrogating the sensors. In this context it will be appreciated, that surface acoustic wave devices are totally passive sensor devices, which do not require a dedicated power supply. Thus there is no need to provide a battery power or other power means for the surface acoustic wave device of the impact sensor of the present invention to be operable. Furthermore, surface acoustic wave devices are characterized by their small size, low cost and rigged construction.

It will further be noted, that a single control unit may be used for operating and interrogating several impact sensing devices arranged in different locations of the car. It will be appreciated, that in this case each of the surface acoustic wave devices associated to the vehicle locations preferably operates in a different oscillating frequency range in order to be selectively addressable. Alternatively or additionally a radio frequency tag may be integrated in each of the surface acoustic wave devices in order to ensure the addressability of each device.

Depending on the embodiment of the invention, the surface acoustic wave device may be arranged inside said sealed chamber and/or it may be arranged at a periphery of said sealed chamber and coupled to a wall of said sealed chamber.

The sealed chamber of the pressure detection device is filled with a pressure medium, i.e. a material which is adapted in order to distribute a pressure homogeneously in the sealed chamber. Any material responding to this criteria may be used for the present invention. Furthermore, in case that the surface acoustic wave device is directly arranged in the pressure medium, the material should advantageously enable the surface acoustic waves to propagate inside the material. In a preferred embodiment, the pressure medium may e.g. comprise a gel-like medium or a liquid or a gaseous fluid.

It will be noted that due to the uniform pressure distribution inside the chamber the shape of the sealed chamber is not crucial to the operation principle of the present invention. It follows that the sealed chamber may be suitably shaped for accommodation at the specific vehicle locations, e.g. as a flexible tube, a flexible cushion or the like. In order to increase the active area of the impact sensor, the sealed chamber may comprise a plurality of cavities arranged at different locations with respect to vehicle, said cavities being interconnected with each other. The different cavities may e.g. be distributed over a specific area of the vehicle so as to ensure even detection of a very localized impact in the specific area. The cavities are interconnected so that a pressure introduced in one of the cavities is transmitted by the pressure medium to the surface acoustic wave device associated to the sealed chamber.

In a preferred embodiment of the invention, said surface acoustic wave device comprises a first surface acoustic wave resonator adapted for pressure measurement inside the sealed chamber and a second acoustic wave resonator adapted for temperature measurement. The first surface acoustic wave resonator is e.g. preferably able to oscillate at a given frequency depending on the pressure inside the sealed chamber while the second surface acoustic wave resonator is able to oscillate at a given frequency depending on the temperature inside the sealed chamber. In this embodiment, the surface acoustic wave device also enables the measurement of the temperature inside the sealed chamber, thus allowing for temperature compensation of the measured pressure values.

It will be noted, that the first and second surface acoustic wave resonators may be provided on a single piezoelectric substrate, whereby different regions of the device are optimized for the measurement of a different environmental parameter.

The present invention also relates to an automotive vehicle comprising at least one impact sensing device as described above and a control unit comprising an RF antenna for remotely communicating with said surface acoustic wave device. The control unit may be arranged at any suitable location within the vehicle with the only condition that the RF antenna "sees" the different impact sensing devices. It will be noted that the RF antenna may be detached from a control unit housing and connected to the control unit by means of cabling.

The impact sensing devices may be integrated in different interesting regions of the vehicle. In an embodiment for the detection of a front crash, the sealed chamber of at least one impact sensing device is e.g. arranged in a vehicle bumper. Depending on the calibration of the impact sensor, this embodiment also enables the detection of an impact with a pedestrian and may accordingly be used in a pedestrian protection system. The sealed chamber will in this embodiment preferably have a tubular shape for easy accommodation into the bumper. The sealed chamber thereby may extend along substantially the entire width of the vehicle bumper or only along a specific portion thereof. It is also possible to provide several sealed chambers, each extending along a portion of the vehicle bumper.

If a side impact has to be detected in order to control the deployment of side airbags, a sealed chamber of at least one impact sensing device may also be arranged in one or more vehicle door(s). These sensors may be used in order to determine the place of the impact and its severity due to the door deformation occurring during the side crash. The obtained information may then be used to steer the counter-measure deployment (front, and side airbags, head protecting airbags, seat belt pre-tensioners, or other devices protecting the driver or passenger. Furthermore, in order to detect a roll-over crash, a sealed chamber of at least one impact sensing device may be arranged in a vehicle roof.

It will be noted, that in a preferred embodiment, wherein a plurality of impact sensing devices are arranged in the vehicle, the vehicle comprises a single control unit comprising an RF antenna for remotely communicating with said plurality of said surface acoustic wave devices.

### Detailed description with respect to the figures

The present invention will be more apparent from the following description of several not limiting embodiments with reference to the attached drawings, wherein
- Fig.1:: shows a view of a vehicle bumper with an embodiment of a impact sensing device;
- Fig.2:: an enlarged sectional view of a portion of a sealed chamber of a first embodiment of the impact sensor;
- Fig.3:: an enlarged sectional view of a portion of a sealed chamber of a second embodiment of the impact sensor;
- Fig.4:: a schematic view of the operation of a impact sensing device
- Fig.5:: shows a view of a vehicle door with an embodiment of a impact sensing device.

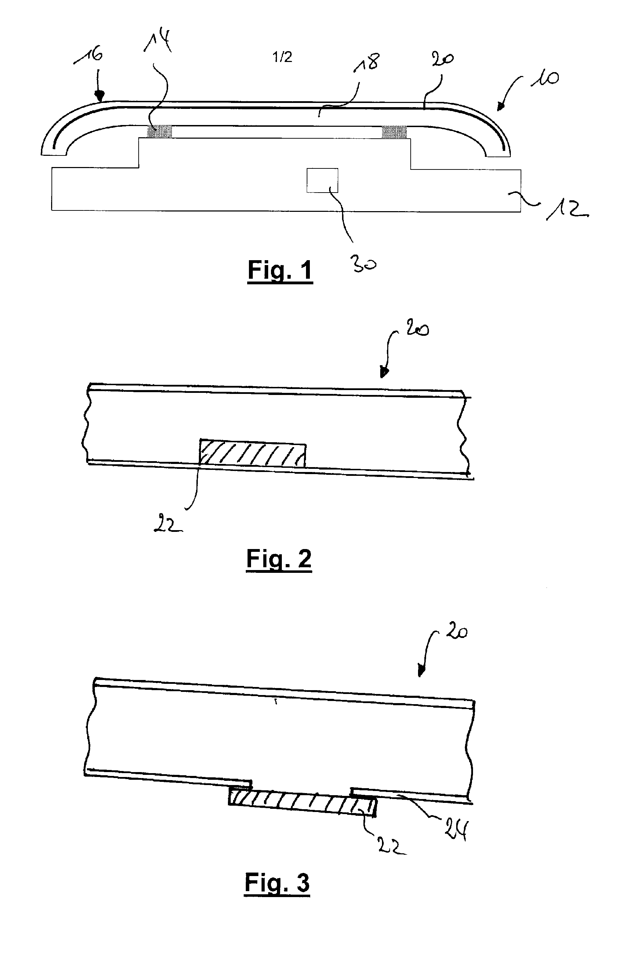

Fig. 1 shows a section view of a vehicle front comprising a bumper 10 which is attached to the (schematically shown) vehicle structure 12 by means of mechanical attachments 14. The bumper comprises an outer bumper plastic or metal skin 16 and an inner bumper filling foam material 18.

A sealed tubular chamber 20 of an impact sensor is integrated into the bumper 10. The chamber 20, which is filled with a pressure medium, is preferably arranged behind the outer bumper skin 16 in a channel arranged into the bumper foam.

A surface acoustic wave device 22 comprising at least one surface acoustic wave resonator 26 is associated to the chamber 20 for sensing the pressure inside the chamber 20. In a possible embodiment, the surface acoustic wave device 22 is arranged inside the sealed chamber 20 (see. Fig. 2). In a different embodiment, the surface acoustic wave device 22 is arranged at a periphery of the sealed chamber 20 and coupled to a wall 24 thereof.

The inside of the sealed chamber 20 is filled with a pressure medium, e.g. a gaseous or a liquid fluid, which enables a pressure acting on one area of the chamber in response to a crash impact to be homogeneously distributed within the sealed chamber so as to act on the surface acoustic wave device 22.

Further to the surface acoustic wave resonator 26, the surface acoustic wave device 22 comprises a miniaturized antenna 28, which is connected to an interdigital transducer (not shown) of the surface acoustic wave resonator 26. This antenna enables the surface acoustic wave device to remotely and wirelessly communicate with a control unit 30 including an RF antenna 32. The control unit 30 with the RF antenna 32 is preferably arranged inside the vehicle e.g. on the car structure 12 at a location, at which the RF antenna 32 "sees" the antennas 28 of different surface acoustic wave devices arranged at different vehicle locations.

The surface acoustic wave resonator 26 is designed for pressure measurement inside the sealed chamber 20. If a radio frequency signal at a frequency ***f***_{***0***} is emitted by the remote control unit 30, the signal is received by the antenna 28 of surface acoustic wave device 22. The surface acoustic wave resonator 26 then oscillates with a frequency ***f***_{***0***}**+*Δf***_{***0***} where ***Δf***_{***0***} is e.g. proportional to the chamber pressure. This frequency ***f***_{***0***}***+Δf***_{***0***} is sent back to and received by the control unit for data processing.

Further to the surface acoustic wave resonator 26, the surface acoustic wave device may comprise a second surface acoustic wave resonator 34 dedicated to the temperature measurement. As for the first resonator 26, the main interdigital transducer of resonator 34 is coupled to antenna 28 of the surface acoustic wave device 22. If a radio frequency signal at a frequency ***f***_{***1***} is emitted by the remote control unit 30, the signal is received by the surface acoustic wave resonator 34 via antenna 28. The surface acoustic wave resonator 34 then oscillates with a frequency ***f***_{***1***}***+Δf***_{***1***}***,*** where ***Δf***_{***1***} is e.g. proportional to the local temperature of the unit (corresponds to the temperature of the inner bumper material). This resonance frequency is sent back to and received by the control unit for further data processing or direct signal transmitting to the car CPU unit. The temperature information then allows to calibrate the measured pressure values in one or more chambers 20 and to evaluate the position of the impact on the bumper, the impact size and severity regardless of the outside temperature influencing the deformability of the bumper structure.

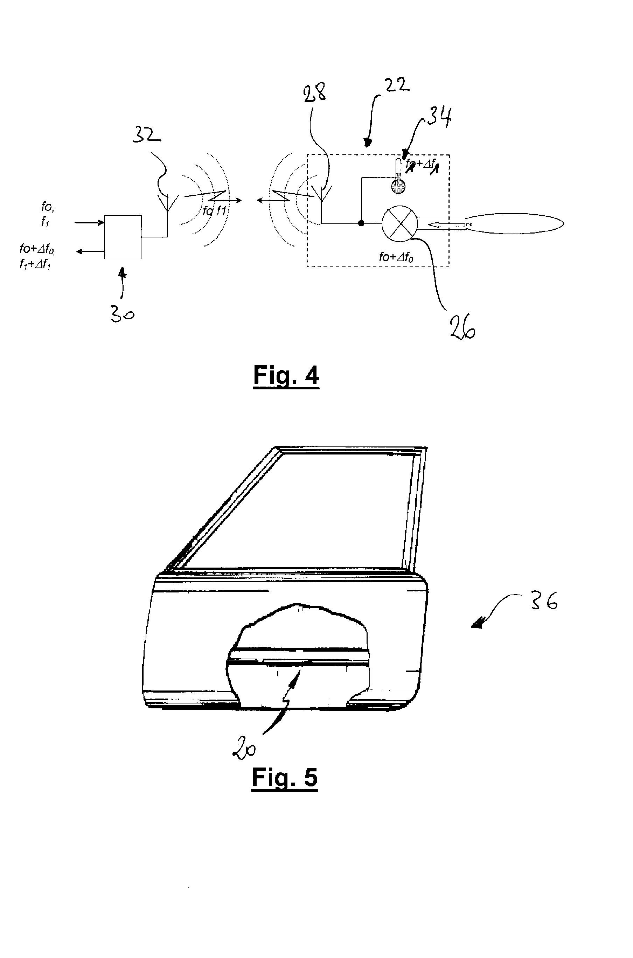

If a side crash or impact has to be detected, the impact sensor is preferably integrated in a lateral part of the vehicle. Such an embodiment is shown in fig. 5, where a sealed chamber 20 of an impact sensor is integrated into a vehicle door 36.

### List of reference numerals

10 vehicle bumper
12 vehicle structure
14 mechanical attachments
16 bumper skin
18 foam material
20 sealed chamber
22 surface acoustic wave device
24 chamber wall
26 surface acoustic wave resonator
28 miniaturized antenna
30 control unit
32 RF antenna
34 surface acoustic wave resonator
36 vehicle door

## Claims

1. Impact sensing device comprising
a sealed chamber filled with a pressure medium, said sealed chamber to be arranged in a vehicle at a location where an impact during a collision situation is to be sensed,
at least one surface acoustic wave device associated to said sealed chamber for sensing a pressure inside said pressure chamber, said surface acoustic wave device including at least one surface acoustic wave resonator and an antenna for remotely communicating with a control unit arranged within said vehicle.

2. Impact sensing device according to claim 1, wherein said surface acoustic wave device is arranged inside said sealed chamber.

3. Impact sensing device according to claim 1, wherein said surface acoustic wave device is arranged at a periphery of said sealed chamber and coupled to a wall of said sealed chamber.

4. Impact sensing device according to any one of claims 1 to 3, wherein said pressure medium comprises a liquid or a gaseous fluid.

5. Impact sensing device according to any one of claims 1 to 4, wherein said sealed chamber comprises a plurality of cavities arranged at different locations of said vehicle, said cavities being interconnected with each other.

6. Impact sensing device according to any one of claims 1 to 5, wherein said surface acoustic wave device comprises a first surface acoustic wave resonator adapted for pressure measurement inside the sealed chamber and a second acoustic wave resonator adapted for temperature measurement.

7. Impact sensing device according to claim 6, wherein said first surface acoustic wave resonator is able to oscillate at a given frequency depending on the pressure inside the sealed chamber.

8. Impact sensing device according to claim 6, wherein said second surface acoustic wave resonator is able to oscillate at a given frequency depending on the temperature inside the sealed chamber.

9. Impact sensing device according to any one of claims 1 to 8, wherein said sealed chamber comprises a flexible tube.

10. Automotive vehicle comprising at least one impact sensing device according to any one of claims 1 to 9 and a control unit comprising an RF antenna for remotely communicating with said surface acoustic wave device.

11. Automotive vehicle according to claim 10, wherein a sealed chamber of at least one impact sensing device is arranged in a vehicle bumper.

12. Automotive vehicle according to claim 11, wherein said sealed chamber extends along substantially the entire width of the vehicle bumper.

13. Automotive vehicle according to any one of claims 10 to 12, wherein a sealed chamber of at least one impact sensing device is arranged in a veh i-cle door.

14. Automotive vehicle according to any one of claims 10 to 13, wherein a sealed chamber of at least one impact sensing device is arranged in a veh i-cle roof.

15. Automotive vehicle according to any one of claims 10 to 14, comprising a plurality of impact sensing devices according to any one of claims 1 to 9, and a single control unit comprising an RF antenna for remotely communicating with said plurality of said surface acoustic wave devices.
